# EUROPEAN PATENT SPECIFICATION

(11) **EP 1 140 547 B1**
(45) Date of publication and mention of the grant of the patent: **19.03.2003**
(21) Application number: 99968005.1
(22) Date of filing: 14.12.1999
(51) Int. Cl.: B60K 37/00, B62D 25/14

(54) **AN ARRANGEMENT AT AN INSTRUMENT PANEL FOR MOTOR VEHICLES**
VORRICHTUNG IN EINEM ARMATURENBRETT FÜR KRAFTFAHRZEUG
AGENCEMENT DANS UN TABLEAU DE BORD POUR VEHICULE A MOTEUR

(30) Priority: 21.12.1998 SE 9804468
(43) Date of publication of application: 10.10.2001
(73) Proprietor: Volvo Car Corporation, 405 31 Göteborg (SE)
(72) Inventor: LARSSON, Göran, S-423 54 Torslanda (SE); GUNNARSON, Anders, S-411 25 Göteborg (SE); LAMARRE, Simon, S-426 68 V. Frölunda (SE); REIKERAS, Karin, S-413 05 Göteborg (SE); REIKERAS, Kjell, S-411 11 Göteborg (SE); LENNARTSSON, Einar, S-466 92 Sollebrunn (SE); THORSSON, Birgitta, S-432 35 Varberg (SE); BERGQVIST, Ake, S-426 77 V. Frölunda (SE)
(74) Representative: Willquist, Bo
(86) International application number: SE9902335
(87) International publication number: WO00037277

(56) References cited:
- WO-A1-97/22510
- DE-A1- 19 524 165
- DE-A1- 19 624 686
- FR-A1- 2 623 776

## Description

The present invention relates to an arrangement in a fascia panel for vehicles, which along its transverse design length in the vehicle has two mounting stations of identical design, both adapted for the installation of either a module designed for the driver or a module designed for the passenger.

EP 0 043 728 (like also WO 9 722 510) relates to a fascia panel for vehicles. On either side of the centre of the fascia panel there is a depression, designed so that it can accommodate a connecting part equipped with instruments intended for the fascia panel. In one of the depressions there is a steering wheel. This is mounted on the end of a steering column, which is in turn arranged on a mounting in the vehicle body. The connecting part is located in the depression in which the steering wheel is located and which has connection contacts for the various instruments.

This specification discloses the construction in a fascia panel and the parts that can be connected thereto, which have the same design regardless of whether they are to be installed in a right-hand or left-hand drive vehicle when assembling the vehicle. It is, however, already definitively determined when manufacturing the vehicle whether it is to be a right-hand or left-hand drive vehicle, in that steering wheels with associated steering column are fitted on the intended driver's side and connections made to the instruments destined for the intended driver's side.

One object of the present invention is to provide a fascia panel of modular construction intended for vehicles.

A second object of the invention is to provide interchangeable modules in order to allow the vehicle to be changed over from right-hand drive to left-hand drive and vice-versa without the need for complicated conversion of the vehicle; this modification can be carried out at any time during the life of the vehicle.

This has been achieved in one embodiment by means of an arrangement of the type referred to in the introductory part, which is characterised in that each mounting station and each module is designed for docking-like installation and removal of the modules, changing of which essentially completes the change-over of the vehicle's driver and-passenger side.

Preferred embodiments have any or some of the characteristics specified in the subordinate claims.

The arrangement according to the invention offers a number of advantages over the prior art. Since the control system intended for control of the vehicle is electrical, the steering wheel need not be mounted in the vehicle body by way of a steering column of conventional type. This has made it possible, right at the vehicle manufacturing stage, to make provision for easy change-over of the driver's side at any time during the life of the vehicle. This facilitates the sale of cars between countries that drive on the right-hand side of the road and those which drive on the left.

The present invention will be described in more detail below by means of an example and with reference to the attached drawings, in which:
- Fig. 1: shows an example of a fascia panel with a driver's and a passenger's module in a left-hand drive vehicle.
- Fig. 2: shows the fascia panel in figure 1 before fitting of the modules.
- Fig. 3: shows the passenger's module in figure 1 viewed obliquely from the rear.
- Fig. 4: shows the driver's module in figure 1 viewed obliquely from the rear.

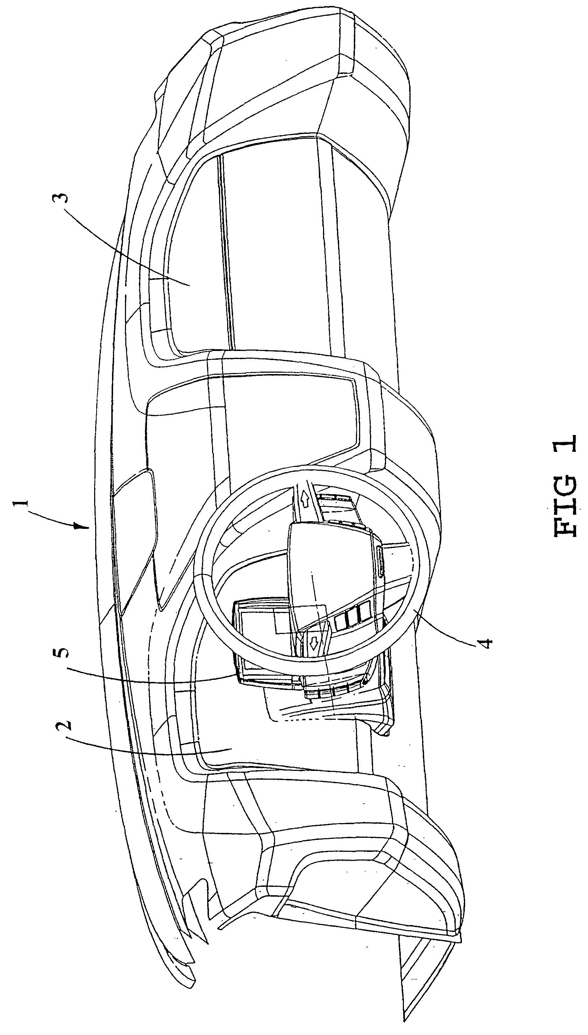

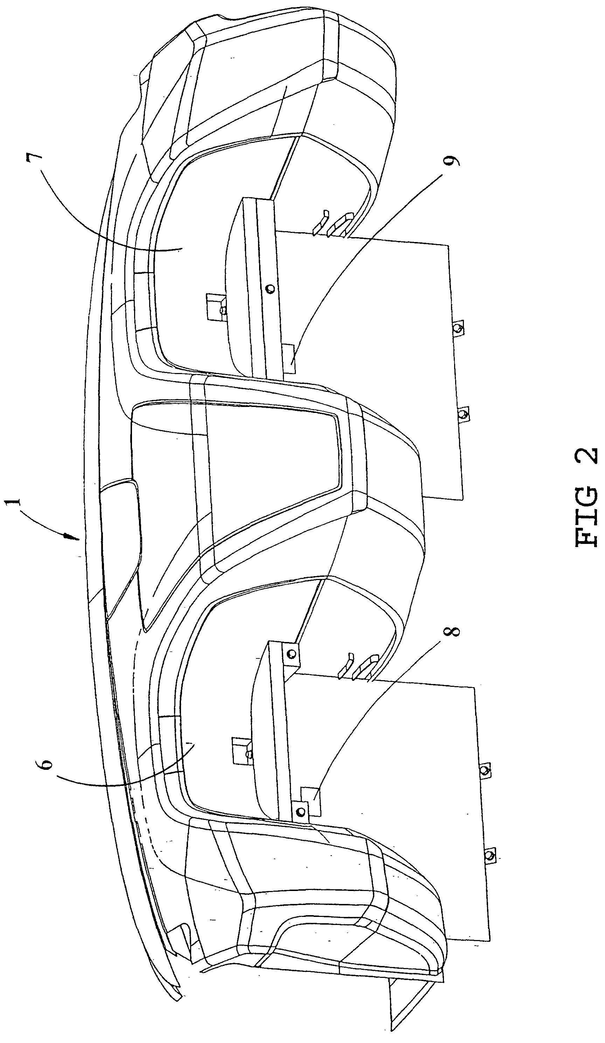

In figure 1 the reference number 1 denotes a fascia panel for vehicles. Along its transverse design length in the vehicle the fascia panel 1 has two mounting stations of identical design. In figure 2 these are denoted by the reference numbers 6 and 7 and are both designed as a recess in the fascia panel. The mounting stations 6, 7 are each intended for optional docking-like installation and removal of a module 2 designed for the driver and a module 3 designed for the passenger. In one example the module 2 or 3 is installed by inserting it into one of the mounting stations 6, 7, following which the module is locked in the inserted position by means of locking elements (not shown). In this example removal is undertaken by unlocking the locking elements, following which the module is taken out of the mounting station. To change the driver's side of the vehicle over, the modules are changed over. As will be appreciated from the description below, only minor additional installation work, if any, is required in order to compete the change-over of the driver's side and the passenger side of the vehicle. The driver's module 2 is equipped with a control element. The control element comprises a control device 4, especially in the form of a steering wheel, together with elements (not shown) designed to produce an electrical signal varying as a function of the control movement of the control device, especially the steering wheel lock, and destined for an electrical control system installed in the vehicle and intended for controlling the vehicle. The vehicle could be an electrical or hybrid car, but vehicle propulsion by a conventional internal combustion engine is also conceivable.

The only crucial requirement is that the vehicle's control system be designed so as to eliminate the need for a steering column.

As will be seen from figure 2, there are connection devices 8, 9 connected to each mounting station 6, 7 respectively and designed to connect the said elements electrically to the vehicle control system. The connection devices 8, 9 are also designed to electrically connect other components in the driver's module 2, designed to communicate with the vehicle, to associated parts in the vehicle. The said components might comprise audio equipment, headlight controls and windscreen wiper controls. In addition the driver's module 2 has a display unit 5 for the display of relevant data for driving of the vehicle. The said display unit 5 may by powered by current from the vehicle and communicate with a computer, either in the driver's module or in the vehicle, the said computer supplying the relevant data. Operating control devices can also be fitted to the driver's module 2 for acceleration and/or braking of the vehicle together with controls for gear changing and for the handbrake. In one embodiment, acceleration and/or braking can be controlled with either hand and in another embodiment may be designed in a separate unit in the driver's module 4, the unit being floor-mounted for foot control in the conventional way. The separate unit may be mounted on or coupled to the driver's module so that it follows the movement of the driver's module. In yet another example the mounting with electrical contact devices is arranged in the floor both on the right-hand side and on the left-hand side of the vehicle for rapid removal and rapid fitting of accelerator and brake pedals.

The connection devices 8, 9 are furthermore designed to electrically connect at least - one component in the passenger's module 3 communicating with the vehicle to associated parts therein. In one example the passenger's module 5 is designed as a storage module, for example a glove compartment, which may be provided with - suitable equipment, such as interior lighting for the storage module, reading light and picture monitor. Electrical equipment is powered by current from the vehicle, which is supplied by way of the connection devices 8, 9.

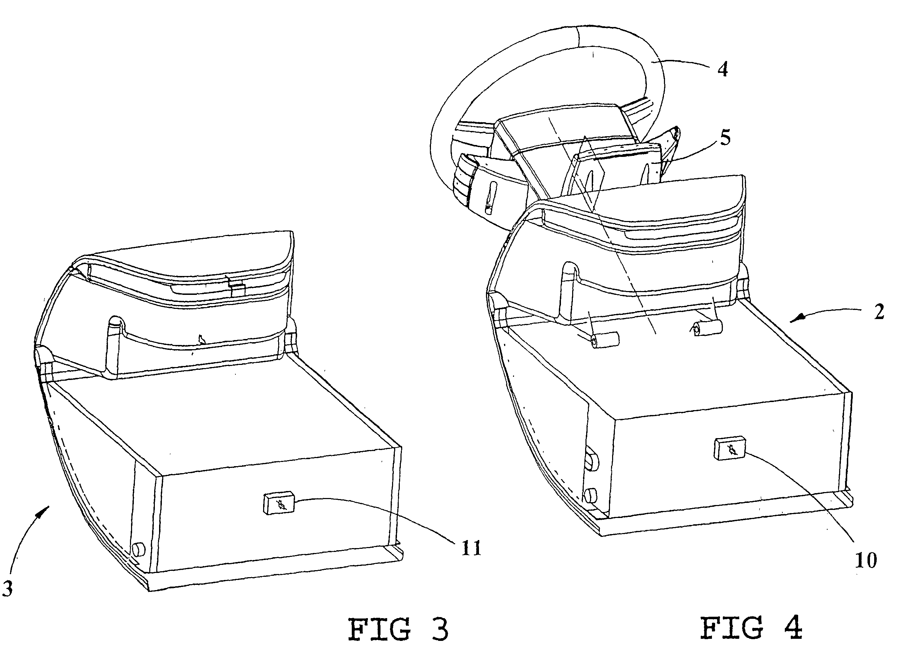

In one example, the connection device 8 or 9 forms part of a multipole contact device, the complementary part 10 or 11 of which is arranged at the back of the respective module. This can be seen from figure 3. In the docking-like installation of the driver's module 2 in the associated mounting station 6 or 7, the module 2 is electrically connected to the vehicle by way of the contact device for the driver's module 2 comprising the connection part 8 and the complementary part 10. In the docking-like installation of the passenger's module 3 in the associated mounting station 6 or 7 the module 3 is electrically connected to the vehicle by way of the contact device for the passenger's module 3 comprising the connection part 9 and the complementary part 11. Each contact device part 8, 9, 10, 11 is therefore designed so that communication is maintained between components of the modules and associated parts in the vehicle, regardless of which of the complementary parts 10, 11 the parts 8, 9 are each respectively connected to. The contact devices may also comprise poles for connection to a data bus for controlling the vehicle audio system, for example.

Designing the modules in such a way that both the driver's and the passenger's modules fit both of the mounting stations, together with the fact that the connection devices can be fitted to both of the modules means that the driver's side and passenger side of the vehicle are easily interchangeable. The facility is therefore available for changing the vehicle from left-hand drive to right-hand driver and vice-versa.

## Claims

1. Arrangement in a fascia panel (1) for vehicles, which along its transverse design length in the vehicle has two mounting stations (6, 7) of identical design, both adapted for the installation of either a module (2) designed for the driver or a module (3) designed for the passenger, each mounting station (6, 7) comprising a recess in the fascia panel (1) adapted for each module (2, 3), **characterised in that** each respective mounting station (6, 7) and each module (2, 3) is designed for docking-like installation and removal of the modules (2, 3) at any time during the life of the vehicle, the changing of the said modules (2, 3) essentially completing the change-over of the vehicle's driver and passenger side, and that there are means (8, 9) connected to each mounting station (6, 7) respectively and designed to electrically connect components at least of the driver's module (2), including elements (4) for controlling the direction of the vehicle, to associated parts in the vehicle in order to permit communication between the modules and the vehicle.

2. Arrangement according to claim 1, **characterised in that** the driver's module (2) is equipped with a control element comprising a control device (4), especially in the form of a steering wheel, together with elements that can be connected to the means of connection (8, 9) and are designed to supply an electrical signal, varying as a function of the control movement of the control device and destined for an electrical control system installed in the vehicle and intended for control of the vehicle.

3. Arrangement according to claim 1, **characterised in that** the means of connection (8, 9) comprise a multipole contact device (8, 9, 10, 11), designed when docking to connect the respective module electrically to each station.

4. Arrangement according to any of the preceding claims, **characterised in that** the driver's module (2) comprises means that are designed, when acted upon, to accelerate the vehicle and/or means designed, when acted upon, to brake the vehicle.

5. Arrangement according to any of the preceding claims, **characterised in that** the driver's module (2) has a display unit for the display of relevant data for driving the vehicle.

## Patentansprüche

1. Anordnung in einem Armaturenbrett (1) für Fahrzeuge, das entlang seiner transversalen Ausgestaltungslänge in dem Fahrzeug zwei Anbringungsstationen (6, 7) von identischer Ausgestaltung aufweist, die beide für den Einbau entweder eines für den Fahrer ausgestalteten Moduls (2) oder eines für den Beifahrer ausgestalteten Moduls (3) angepasst sind, wobei jede Anbringungsstation (6, 7) eine für jedes Modul (2, 3) angepasste Vertiefung in dem Armaturenbrett (1) aufweist, **dadurch gekennzeichnet, dass** jede jeweilige Anbringungsstation (6, 7) und jedes Modul (2, 3) zur dockähnlichen Installation und Entfernung der Module (2, 3) zu einer beliebigen Zeit während der Lebensdauer des Fahrzeugs ausgestaltet ist, wobei das Auswechseln der Module (2, 3) im wesentlichen den Wechsel der Fahrzeug-Fahrer- und Beifahrerseite abschließt, und dass es Mittel (8, 9) gibt, die jeweils mit jeder Anbringungsstation (6, 7) verbunden und ausgestaltet sind, um Komponenten mindestens des Fahrermoduls (2), einschließlich Elemente (4), die die Richtung des Fahrzeugs steuern, mit zugeordneten Teilen in dem Fahrzeug elektrisch zu verbinden, um eine Kommunikation zwischen den Modulen und dem Fahrzeug zu ermöglichen.

2. Anordnung gemäß Anspruch 1, **dadurch gekennzeichnet, dass** das Fahrermodul (2) mit einem Steuerelement ausgerüstet ist, das eine Steuervorrichtung (4), insbesondere in der Form eines Lenkrads, zusammen mit Elementen umfasst, die mit den Verbindungsmitteln (8, 9) verbunden sein können und ausgestaltet sind, um ein elektrisches Signal zu liefern, das sich in Abhängigkeit von der Steuerbewegung der Steuervorrichtung verändert und für ein in dem Fahrzeug eingebautes elektrisches Steuersystem und für die Steuerung des Fahrzeugs bestimmt ist.

3. Anordnung gemäß Anspruch 1, **dadurch gekennzeichnet, dass** die Verbindungsmittel (8, 9) eine mehrpolige Kontaktvorrichtung (8, 9, 10, 11) umfassen, die beim Docken ausgestaltet ist, das jeweilige Modul elektrisch mit jeder Station zu verbinden.

4. Anordnung gemäß einem der vorhergehenden Ansprüche, **dadurch gekennzeichnet, dass** das Fahrermodul (2) Mittel, die ausgestaltet sind, wenn sie betätigt werden, um das Fahrzeug zu beschleunigen, und/oder Mittel, die ausgestaltet sind, wenn sie betätigt werden, um das Fahrzeug zu bremsen, umfasst.

5. Anordnung gemäß einem der vorhergehenden Ansprüche, **dadurch gekennzeichnet, dass** das Fahrermodul (2) eine Anzeigeeinheit für die Anzeige relevanter Daten zum Fahren des Fahrzeugs umfasst.

## Revendications

1. Agencement dans un tableau de bord (1) pour véhicules qui comporte, le long de sa dimension transversale de construction dans le véhicule, deux emplacements de montage (6, 7) de structure identique, permettant tous deux l'installation d'un module (2) conçu pour le conducteur ou d'un module (3) conçu pour le passager, chaque emplacement de montage (6, 7) comprenant un évidement dans le tableau de bord (1) qui convient pour chaque module (2, 3), **caractérisé en ce que** chaque emplacement de montage respectif (6, 7) et chaque module (2, 3) sont conçus pour un montage et un démontage du type à emboîtement des modules (2, 3) à tout moment pendant 1a vie du véhicule, le changement des dits modules (2, 3) effectuant sensiblement complètement la permutation du côté conducteur et du côté passager du véhicule, et **en ce qu'**il est prévu des moyens (8, 9) connectés respectivement à chaque emplacement de montage (6, 7) et conçus pour la connexion électrique de composants, au moins du module de conducteur (2) incluant des éléments (4) de commande de la direction du véhicule, à des parties associées dans le véhicule afin de permettre une communication entre les modules et le véhicule.

2. Agencement selon la revendication 1, **caractérisé en ce que** le module de conducteur (2) est équipé d'un élément de commande comprenant un dispositif de commande (4), en particulier sous la forme d'un volant de direction, associé à des éléments qui peuvent être connectés aux moyens de connexion (8. 9) et qui sont prévus pour fournir un signal électrique variable en fonction du mouvement de manoeuvre du dispositif de commande et destiné à un système de commande électrique installé dans le véhicule et servant à la commande du véhicule.

3. Agencement selon la revendication 1, **caractérisé en ce que** les moyens de connexion (8, 9) comprennent un dispositif de contact multipolaire (8, 9, 10, 11), prévu pour connecter, lors de l'emboîtement, le module respectif électriquement à chaque emplacement de montage.

4. Agencement selon une quelconque des revendications précédentes, **caractérisé en ce que** le module de conducteur (2) comprend des moyens qui sont prévus, lorsqu'ils sont actionnés, pour accélérer le véhicule et/ou des moyens prévus, lorsqu'ils sont actionnés, pour freiner le véhicule.

5. Agencement selon une quelconque des revendications précédentes, **caractérisé en ce que** le module de conducteur (2) comprend une unité d'affichage pour l'affichage de données appropriées pour la conduite du véhicule.
